# EUROPÄISCHE PATENTSCHRIFT

(11) **EP 1 197 733 B1**
(45) Veröffentlichungstag und Bekanntmachung des Hinweises auf die Patenterteilung: **07.10.2009**
(21) Anmeldenummer: 01124095.9
(22) Anmeldetag: 10.10.2001
(51) Int. Cl.: G01F 15/18, G01F 15/14, F16L 55/07, F16L 47/00

(54) **Einrohranschlussstück für den Einbau einer Zähleinrichting für ein strömendes Medium**
Pipe connecting device for receiving a flow counter
Dispositif de raccordement de tuyaux pour recevoir un compteur de débit

(30) Priorität: 13.10.2000 DE 20017613 U
(43) Veröffentlichungstag der Anmeldung: 17.04.2002
(73) Patentinhaber: ista Deutschland GmbH, 45131 Essen (DE)
(72) Erfinder: Schulz, Britt-Astrid, 41462 Neuss (DE); Seeliger, Franko, 48282 Emsdetten (DE); Bluhm, Wolfgang, 45277 Essen (DE)
(74) Vertreter: DR. STARK & PARTNER

(56) Entgegenhaltungen:
- EP-A- 0 198 272
- DE-A- 2 057 566
- DE-A- 3 133 607
- DE-A- 3 150 796
- DE-A- 19 827 992
- GB-A- 2 246 638
- NL-A- 301 850

## Beschreibung

Die Erfindung betrifft ein Einrohranschlussstück für den Einbau einer Zähleinrichtung für ein strömendes Medium in einer Rohrleitung gemäß Oberbegriff von Patentanspruch 1.

Aus der Praxis sind derartige Einrohranschlussstücke bekannt, die einen problemlosen Austausch der Zähleinrichtung bei Defekten oder nach Ablauf der Eichgültigkeit ohne Eingriff in das Rohrnetz ermöglichen und die üblicherweise aufgrund der erforderlichen hohen Festigkeitswerte, insbesondere hinsichtlich der Druckbelastung und der Verbindung mit der angrenzenden Rohrleitung aus Messing, Rotguss oder ähnlichen Metalllegierungen bestehen.

Nachteilig hierbei ist, dass aus diesen Metalllegierungen einzelne Bestandteile in Spuren herausgelöst werden können. Bei Verwendung von Messing ist dies z. B. das Schwermetall Blei. Ab bestimmten Konzentrationen sind hierdurch negative gesundheitliche Auswirkungen möglich und können nicht mit Sicherheit ausgeschlossen werden. Aus diesem Grunde bestehen in einzelnen Ländern Verwendungseinschränkungen für Messingteile in Trinkwassersystemen. Ein anderer Nachteil von Einrohranschlussstücken aus entsprechenden Metalllegierungen besteht in der Gefahr von Spannungsrisskorrosionen, die durch das Herauslösen von unedleren Metallkomponenten aus der Metalllegierung verursacht werden können. Hierdurch kann es zum Bruch des Einrohranschlussstückes kommen, wodurch Folgeschäden, wie z. B. Wasserschäden im Bauwerk, verursacht werden können und aufwendige Reparaturen, wie z. B. ein Bauteilaustausch notwendig werden.

Aus der DE 31 33 607 A1 ist ein Zwischenstück zur nachträglichen Montage eines Wasserzählers zur Messung des Warmwasserverbrauchs bekannt, das in allen Abmessungen aus Kunststoff sein kann.

Die GB 2 246 638 A beschreibt ebenfalls ein Einrohranschlussstück für den Einbau einer Durchflussmesseinrichtung, dessen Bestandteile vorzugsweise aus einem Plastikmaterial sein können.

Andere Einrohranschlussstücke sind in der DE 20 57 566 A, der DE 31 550 796 A1, der EP 0 198 272 A2 und der DE 198 27 992 beschrieben.

Nachteilig hierbei ist, dass Kunststoff erfahrungsgemäß nur eine begrenzte Belastbarkeit aufweist und zudem im Laufe der Zeit verhärtet und zur Versprödung neigt. Da die erfindungsgemäßen, häufig auch als Unterbauteile ausgeprägten Zähleranschlussstücke üblicherweise unbegrenzt verbaut bleiben, ist insoweit eine dauerhaft hohe Belastbarkeit von sehr großer Bedeutung.

Aufgabe der Erfindung ist es, die vorgenannten Nachteile zu vermeiden und ein Einrohranschlussstück anzugeben, das vielseitig und ohne insbesondere gesundheitliche Einschränkungen einsetzbar ist sowie eine dauerhaft hohe Belastbarkeit aufweist.

Diese Aufgabe wird gelöst durch ein Einrohranschlussstück mit den Merkmalen des kennzeichnenden Teil des Anspruchs 1. Hierdurch wird sicher vermieden, dass ein Ausschwemmen metallischer Bestandteile durch das strömende Medium erfolgen kann, so dass weder das Einrohranschlussstück geschwächt noch das strömende Medium verunreinigt wird. Als Material wird Kunststoff verwendet, so dass als weiterer Vorteil die Herstellung einfacher und kostengünstiger ist.

Dabei ist das nichtmetallische Material ein bis ca. 90°C temperaturfester Kunststoff, so dass das Einrohrschlussstück auch für erhitzte Medien, wie z.B. bei der Heißwasserversorgung, anwendbar ist, ohne dass eine Schwächung und/oder Verformung eintritt.

Weiterhin ist das nichtmetallische Material ein faserverstärkter Werkstoff, so dass eine höhere Materialfestigkeit und -belastbarkeit gegeben ist. Hierzu kann das Material bereits vor der Herstellung des Einrohranschlussstückes mit faserverstärkenden Bestandteilen versehen sein, z.B. Kunststoffgranulat mit Glasfaserbestandteilen und/oder es können in dem fertiggestellten Einrohranschlussstück zumindest teilweise Fasereinlagen vorgesehen sein. Diese können vorzugsweise wenigstens in besonders belasteten Bereichen des Einrohranschlussstückes, z.B. im Bereich der Anschlusselemente vorgesehen und als umlaufende Wicklungen ausgebildet sein.

Durch außenseitig Verstärkungsrippen sind besonders beanspruchte Bereiche, wie z.B. die Anschlusselemente, insbesondere bei dort angeordnetem konischen Innengewinde gezielt verstärkt ausgebildet. Hierfür kann auch zumindest ein Anschlusselement außenseitig ein umlaufendes, insbesondere zylinderringförmig ausgebildetes Verstärkungselement aufweisen.

Vorteilhafterweise kann zumindest ein Anschlusselement eine Gewindeeinlage aus Metall, insbesondere Messing aufweisen, so dass neben einer garantiert ausreichenden Materialfestigkeit auch ohne Verstärkungselemente identische Befestigungsmöglichkeiten wie bei bisherigen Einrohranschlussstücken gegeben sind und eine Umstellung von Werkzeug und Montageweise für die Monteure und Handwerker nicht erforderlich ist.

Zu diesem Zweck kann auch zumindest ein Anschlusselement eine Gewindeeinlage aus Hartkunststoff aufweisen.

Bei einem bevorzugten Ausführungsbeispiel der Erfindung kann das Anschlusselement für die Zähleinrichtung eine Dichtung zur Trennung des Gehäuses der Zähleinrichtung von dem strömenden Medium aufweisen, so dass das strömende Medium auch bei üblichen metallischen Gehäusematerialien, wie z.B. Messing oder dergleichen der als Patronenzähler ausgebildeten Zähleinrichtung nicht mit diesen Materialien in Kontakt kommt und somit durch diese verunreinigt werden könnte.

Erfindungsgemäß kann zumindest ein Anschlusselement ein Innengewinde oder ein Außengewinde beinhalten. Hierbei kann das Innengewinde konisch ausgebildet sein und sich einwärts verjüngen, so dass bei Verschraubung mit einem normalen Außengewinde durch die Verjüngung des Innengewindes automatisch eine Abdichtung eintritt. Zu diesem Zweck kann auch das Außengewinde konisch sich erweiternd ausgebildet sein, und auch die Steckverbindung kann eine konische Ausprägung aufweisen.

Vorteilhafterweise kann wenigstens ein Gewinde als Kunststoffgewinde, insbesondere Kunststoff-Trapezgewinde ausgebildet sein, so dass einerseits durch ein einheitliches Material das Einrohranschlussstück einfach gefertigt werden kann und andererseits das Gewinde entsprechend belastbar ist.

Auch kann zumindest ein Anschlusselement einen Bajonettverschluss oder geeignete Befestigungselemente für einen Bajonettverschluss ausweisen, oder es kann zumindest ein Anschlusselement als eine insbesondere mit einer Sicherungseinrichtung gegen axiale Verlagerung, wie z. B. einem Bügel, einer Sicherungsschraube, einem Sprengring oder dergleichen versehene Flanschverbindung ausgebildet sein.

Ferner kann zumindest ein Anschlusselement als eine insbesondere mit einer Sicherungseinrichtung gegen axiale Verlagerung, wie z. B. einem Bügel, einer Sicherungsschraube, einem Sprengring oder dergleichen versehene Steckverbindung ausgebildet sein, wobei der rohrseitige Teil der Steckverbindung eine auf die Rohrleitung abgestimmte innere Form aufweisen kann.

Bei einem bevorzugten Ausführungsbeispiel kann wenigstens ein Anschlusselement über Mittel zur Entkopplung der Verbindungskraft, insbesondere Schraubkraft, insbesondere einem Sprengring oder dergleichen, mit dem Einrohranschlussstück verbunden sein.

Im Folgenden werden in der Zeichnung dargestellte Ausführungsbeispiele der Erfindung erläutert. Es zeigen:
- Fig. 1: eine erste Ausführung eines erfindungsgemäßen Einrohrschlussstückes und
- Fig. 2: ein weiteres Ausführungsbeispiel.

In allen Figuren werden für gleiche bzw. gleichartige Bauteile übereinstimmende Bezugszeichen verwendet.

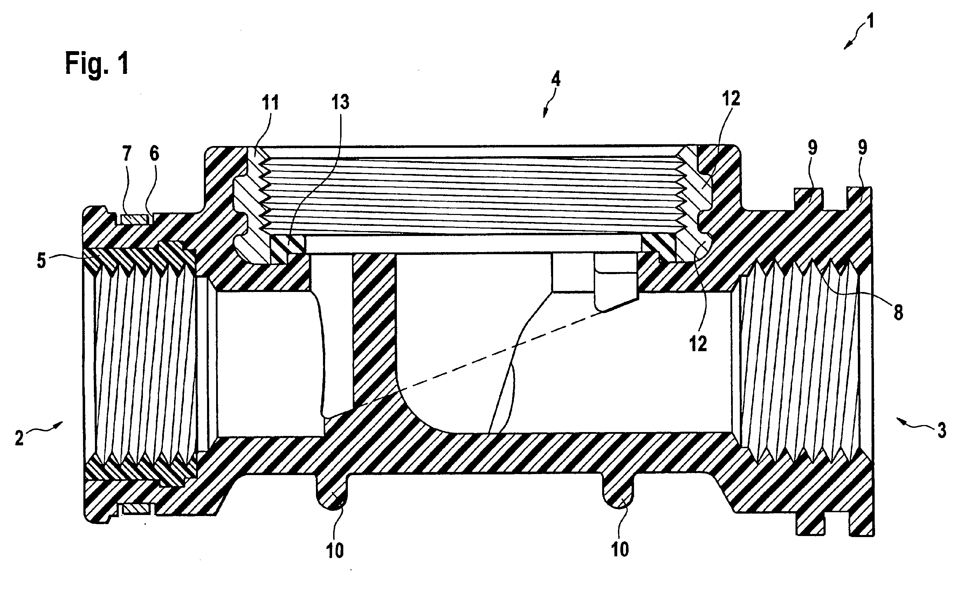

Fig. 1 zeigt ein Einrohranschlussstück 1 für den Einbau einer in der Zeichnung nicht dargestellten Zähleinrichtung für ein strömendes Medium in einer in der Zeichnung ebenfalls nicht dargestellten Rohrleitung. Das Einrohranschlussstück 1 besteht aus einem eingangsseitigen Anschlusselement 2 und einem ausgangsseitigen Anschlusselement 3 zum Anschluss an die jeweiligen Teile der Rohrleitung. Weiterhin ist ein Anschlusselement 4 für die nicht dargestellte Zähleinrichtung vorgesehen.

Dabei kann die Zähleinrichtung sowohl Mittel zur Erfassung als auch Mittel zur Anzeige der Durchströmung aufweisen, die vorzugsweise in eine komplett tauschbare Einheit integriert sein können.

Das Medium strömt dabei durch das eingangsseitige Anschlusselement 2, welches einen ringförmigen Auslass in dem Anschlusselement 4 für die Zähleinrichtung aufweist, dann durch die Zähleinrichtung und über den koaxial in dem ringförmigen Auslass angeordneten Fortsatz des ausgangsseitigen Anschlusselementes 3 weiter.

Das Einrohranschlussstück 1 besteht dabei aus einem Kunststoffmaterial, das bis ca. 90°C temperaturfest ist und im Material enthaltene verstärkende Faserbestandteile aufweist. Das eingangsseitige Anschlusselement 2 weist eine mit einem sich in Richtung zur Mitte des Einrohranschlussstücks 1 verjüngenden konischen Innengewinde 5 versehene Gewindeeinlage aus Metall oder Hartkunststoff auf, so dass bei Verschraubung mit einem an der Rohrleitung angebrachten, gerade ausgebildeten Außengewinde durch die Konizität automatisch eine Abdichtung der Verbindung erzielt wird. Zur Vermeidung einer Aufweitung des eingangsseitigen Anschlusselementes 2 oder gar einer Beschädigung, z.B. durch Aufreißen des Anschlusselementes 2, ist in einer umlaufenden außenseitigen Vertiefung 6 ein zylinderringförmig ausgebildetes Verstärkungselement 7 vorgesehen.

Das ausgangsseitige Anschlusselement 3 weist ein Innengewinde 8 sowie außenseitige umlaufende Verstärkungsrippen 9 auf.

Auch der unterseitige Bereich des Einrohranschlussstückes 1 ist mit Verstärkungsrippen 10 versehen.

Das Anschlusselement 4 für die Zähleinrichtung weist eine Gewindeeinlage 11 auf, die mit Vorsprüngen 12 in dem Anschlusselement 4 gehalten ist. Unterseitig ist eine Dichtung 13, die das Gehäuse der nicht dargestellten Zähleinrichtung von dem strömenden Medium trennt, vorgesehen.

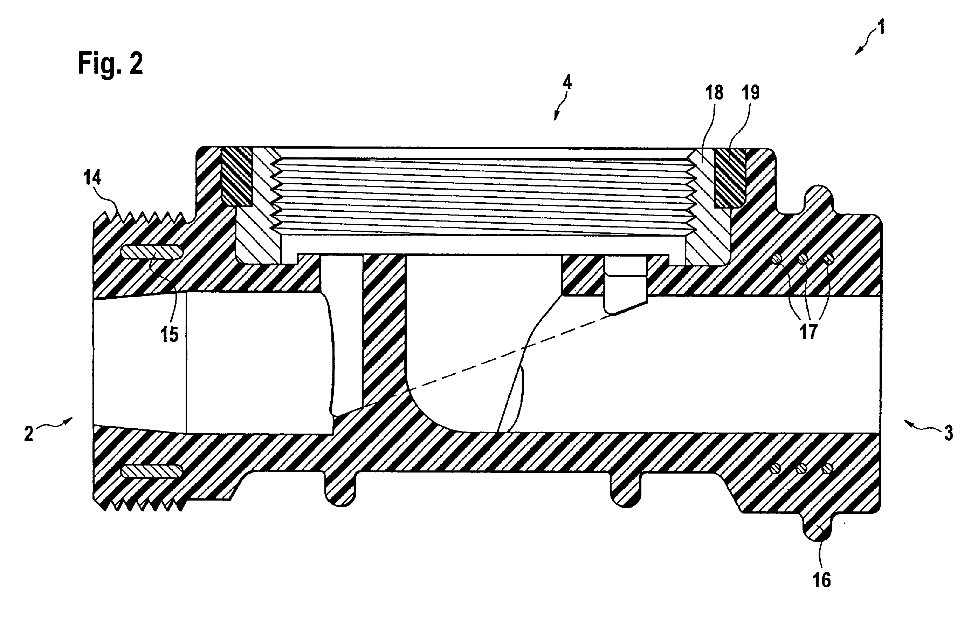

Fig. 2 zeigt ein weiteres Ausführungsbeispiel eines erfindungsgemäßen Einrohranschlussstückes 1, bei dem das eingangsseitige Anschlusselement 2 ein Außengewinde 14 sowie ein im Material befindliches, umlaufendes und zylinderringförmig ausgebildetes Verstärkungselement 15 aufweist.

Das ausgangsseitige Anschlusselement 3 weist einen außenseitig umlaufenden wulstförmigen Ring 16 und im Material eingebettete verstärkende Fasereinlagen 17 auf, so dass bei Herstellung einer Steckverbindung die entsprechenden Kräfte aufgefangen werden.

Das Anschlusselement 4 für die Zähleinrichtung weist eine mit einem Innengewinde versehene Gewindeeinlage 18 auf, die durch einen mit Ultraschall eingeschweißten Kunststoffring 19 fixiert ist.

## Patentansprüche

1. Einrohranschlussstück (1) für den Einbau einer Zähleinrichtung für ein strömendes Medium in einer Rohrleitung, mit einem eingangsseitigen Anschlusselement (2) und einem ausgangsseitigen Anschlusselement (3) sowie einem Anschlusselement (4) für die Zähleinrichtung, wobei das Einrohranschlussstück (1) aus nichtmetallischen Materialien, wie z.B. Kunststoff besteht, **dadurch gekennzeichnet, dass** zur Vermeidung einer Aufweitung des eingangsseitigen Anschlusselements (2) in einer umlaufenden außenseitigen Vertiefung (6) ein zylinderringförmig ausgebildetes Verstärkungselement (7) Vorhanden ist.

2. Einrohranschlussstück (1) für den Einbau einer Zähleinrichtung für ein strömendes Medium in einer Rohrleitung, mit einem eingangsseitigen Anschlusselement (2) und einem ausgangsseitigen Anschlusselement (3) sowie einem Anschlusselement (4) für die Zähleinrichtung, wobei das Einrohranschlussstück (1) aus nichtmetallischen Materialien, wie z.B. Kunststoff besteht, **dadurch gekennzeichnet, dass** das eingangsseitige Anschlusselement (2) ein im Material befindliches, umlaufendes und zylinderringförmig ausgebildetes Verstärkungselement (15) aufweist.

3. Einrohranschlussstück (1) nach Anspruch 1 oder 2, **dadurch gekennzeichnet, dass** das nichtmetallische Material ein bis ca. 90°C temperaturfester Kunststoff ist.

4. Einrohranschlussstück (1) nach einem der Ansprüche 1 bis 3, **dadurch gekennzeichnet, dass** das nichtmetallische Material ein faserverstärkter Werkstoff ist.

5. Einrohranschlussstück (1) nach Anspruch 4, **dadurch gekennzeichnet, dass** zumindest teilweise Fasereinlagen (17) vorgesehen sind.

6. Einrohranschlussstück (1) nach einem der Ansprüche 1 bis 5, **dadurch gekennzeichnet, dass** zumindest ein Anschlusselement (2, 3, 4) eine Gewindeeinlage (11) aus Metall, insbesondere Messing aufweist.

7. Einrohranschlussstück (1) nach einem der Ansprüche 1 bis 6, **dadurch gekennzeichnet, dass** zumindest ein Anschlusselement (2, 3, 4) eine Gewindeeinlage (18) aus Hartkunststoff aufweist.

8. Einrohranschlussstück (1) nach einem der Ansprüche 1 bis 7, **dadurch gekennzeichnet, dass** das Anschlusselement (4) für die als Patronenzähler ausgebildete Zähleinrichtung eine Dichtung (13) zur Trennung des Gehäuses, insbesondere der Messinghülse der Zähleinrichtung von dem strömenden Medium aufweist.

9. Einrohranschlussstück (1) nach einem der Ansprüche 1 bis 8, **dadurch gekennzeichnet, dass** zumindest ein Anschlusselement (2, 3, 4) ein Innengewinde (8) aufweist.

10. Einrohranschlussstück (1) nach einem der Ansprüche 1 bis 9, **dadurch gekennzeichnet, dass** zumindest ein Anschlusselement (2, 3, 4) ein insbesondere konisch ausgebildetes Außengewinde (14) aufweist.

11. Einrohranschlussstück (1) nach Anspruch 9 oder 10, **dadurch gekennzeichnet, dass** wenigstens ein Gewinde (8, 14) als Kunststoffgewinde, insbesondere Kunststoff-Trapezgewinde ausgebildet ist.

12. Einrohranschlussstück (1) nach einem der Ansprüche 1 bis 11, **dadurch gekennzeichnet, dass** zumindest ein Anschlusselement (2, 3, 4) einen Bajonettverschluss oder geeignete Befestigungselemente für einen Bajonettverschluss ausweist.

13. Einrohranschlussstück (1) nach einem der Ansprüche 1 bis 12, **dadurch gekennzeichnet, dass** zumindest ein Anschlusselement (2, 3, 4) als eine insbesondere mit einer Sicherungseinrichtung gegen axiale Verlagerung, wie z. B. einem Bügel, einer Sicherungsschraube, einem Sprengring oder dergleichen versehene Flanschverbindung ausgebildet ist.

14. Einrohranschlussstück (1) nach einem der Ansprüche 1 bis 13, **dadurch gekennzeichnet, dass** zumindest ein Anschlusselement (2, 3, 4) als eine insbesondere mit einer Sicherungseinrichtung gegen axiale Verlagerung, wie z. B. einem Bügel, einer Sicherungsschraube, einem Sprengring oder dergleichen versehene Steckverbindung ausgebildet ist.

15. Einrohranschlussstück (1) nach einem der Ansprüche 1 bis 14, **dadurch gekennzeichnet, dass** der rohrseitige Teil der Steckverbindung eine auf die Rohrleitung abgestimmte innere Form aufweist.

16. Einrohranschlussstück (1) nach einem der Ansprüche 1 bis 15, **dadurch gekennzeichnet, dass** außenseitig Verstärkungsrippen (10) vorgesehen sind.

17. Einrohranschlussstück (1) nach einem der Ansprüche 1 bis 16, **dadurch gekennzeichnet, dass** zumindest ein Anschlusselement (2, 3, 4) außenseitig ein umlaufendes, insbesondere zylinderringförmig ausgebildetes Verstärkungselement aufweist.

18. Einrohranschlussstück (1) nach einem der Ansprüche 1 bis 17, **dadurch gekennzeichnet, dass** wenigstens ein Anschlusselement über Mittel zur Entkopplung der Verbindungskraft, insbesondere Schraubkraft, insbesondere einem Sprengring oder dergleichen, mit dem Einrohranschlussstück verbunden ist.

## Claims

1. Single-pipe connector piece (1) for the installation of a metering device for a flowing medium in a pipeline, said connector piece having an inlet-side connector element (2) and an outlet-side connector element (3) and a connector element (4) for the metering device, wherein the single-pipe connector piece (1) is produced from non-metallic material, such as, for example, plastics material, **characterized in that** for avoiding an expanding of the inlet-side connector element (2) there is a cylindrical ring-shaped reinforcing element (7) in a circumferentially shaped exterior recess (6).

2. Single-pipe connector piece (1) for the installation of a metering device for a flowing medium in a pipeline, said connector piece having an inlet-side connector element (2) and an outlet-side connector element (3) and a connector element (4) for the metering device, wherein the single-pipe connector piece (1) is produced from non-metallic material, such as, for example, plastics material, **characterized in that** the inlet-side connector element (2) has a circumferential, cylinder ring-shaped reinforcing element (15) located in the material.

3. Single-pipe connector piece (1) according to Claim 1 or 2, **characterized in that** the non-metallic material is a plastics material that is temperature-resistant up to ca. 90°.

4. Single-pipe connector piece (1) according to one of Claims 1 to 3,
**characterized in that** the non-metallic material is a fibre-reinforced material.

5. Single-pipe connector piece (1) according to Claim 4, **characterized in that** fibre inlays (17) are provided at least partially.

6. Single-pipe connector piece (1) according to one of Claims 1 to 5, **characterized in that** at least one connector element (2, 3, 4) has a threaded insert (11) made of metal, in particular brass.

7. Single-pipe connector piece (1) according to one of Claims 1 to 6,
**characterized in that** at least one connector element (2, 3, 4) has a threaded insert made of hardened plastics material.

8. Single-pipe connector piece (1) according to one of Claims 1 to 7, **characterized in that** the connector element (4) has a seal (13) for the metering device, which is in the form of a cartridge meter, for separating the housing, in particular the brass sleeve of the metering device from the flowing medium.

9. Single-pipe connector piece (1) according to one of Claims 1 to 8, **characterized in that** at least one connector element (2, 3, 4) has an internal thread (8).

10. Single-pipe connector piece (1) according to one of Claims 1 to 9, **characterized in that** at least one connector element (2, 3, 4) has an outer thread (14) that is in particular conical.

11. Single-pipe connector piece (1) according to Claim 9 or 10, **characterized in that** at least one thread (8, 14) is in the form of a plastics material thread, in particular a plastics material trapezoidal thread.

12. Single-pipe connector piece (1) according to one of Claims 1 to 11, **characterized in that** at least one connector element (2, 3, 4) has a bayonet closure or suitable securing elements for a bayonet closure.

13. Single-pipe connector piece (1) according to one of Claims 1 to 12, **characterized in that** at least one connector element (2, 3, 4) is in the form of a flange connection provided in particular with a locking ring against axial displacement, such as, for example, a stirrup piece, a locking screw, a snap ring or the like.

14. Single-pipe connector piece (1) according to one of Claims 1 to 13, **characterized in that** at least one connector element (2, 3, 4) is in the form of a plug-in connection provided in particular with a locking ring against axial displacement, such as, for example, a stirrup piece, a locking screw, a snap ring or the like.

15. Single-pipe connector piece (1) according to one of Claims 1 to 14, **characterized in that** the pipe-side part of the plug-in connection has an inner shape that is determined by the pipeline.

16. Single-pipe connector piece (1) according to one of Claims 1 to 15,
**characterized in that** reinforcing ribs (10) are provided on the outside.

17. Single-pipe connector piece (1) according to one of Claims 1 to 16,
**characterized in that** at least one connection element (2, 3, 4) has a circumferential reinforcing element, in particular in the shape of a cylindrical ring, on the outside.

18. Single-pipe connector piece (1) according to one of Claims 1 to 17, **characterized in that** at least one connector element is connected to the single-pipe connector piece via means for decoupling the connecting force, in particular screw force, in particular a snap ring or the like.

## Revendications

1. Raccord monotube (1) pour l'installation d'un compteur pour un fluide s'écoulant dans une tuyauterie, avec un élément de raccordement (2) du côté d'entrée et un élément de raccordement (3) du côté de sortie, ainsi qu'un élément de raccordement (4) pour le compteur, sachant que le raccord monotube (1) est constitué de matériaux non métalliques, comme par exemple de matière plastique, **caractérisé en ce que,** afin d'éviter un élargissement de l'élément de raccordement (2) du côté d'entrée, un élément de renforcement (7) réalisé sous forme de bague cylindrique est présent dans un renfoncement entourant extérieur (6).

2. Raccord monotube (1) pour l'installation d'un compteur pour un fluide s'écoulant dans une conduite, avec un élément de raccordement (2) du côté d'entrée et un élément de raccordement (3) du côté de sortie, ainsi qu'un élément de raccordement (4) pour le compteur, sachant que le raccord monotube (1) est constitué de matériaux non métalliques, comme par exemple de matière plastique, **caractérisé en ce que** l'élément de raccordement (2) du côté d'entrée présente un élément de renforcement entourant (15) se trouvant dans le matériau et réalisé sous forme de bague cylindrique.

3. Raccord monotube (1) selon la revendication 1 ou 2, **caractérisé en ce que** le matériau non métallique est une matière plastique résistant aux températures jusqu'à environ 90°C.

4. Raccord monotube (1) selon l'une des revendications 1 à 3, **caractérisé en ce que** le matériau non métallique est un matériau renforcé par des fibres.

5. Raccord monotube (1) selon la revendication 4, **caractérisé en ce que** des inserts fibreux (17) sont prévus au moins dans certaines parties.

6. Raccord monotube (1) selon l'une des revendications 1 à 5, **caractérisé en ce qu'**au moins un élément de raccordement (2, 3, 4) présente un insert fileté (11) en métal, en particulier en laiton.

7. Raccord monotube (1) selon l'une des revendications 1 à 6, **caractérisé en ce qu'**au moins un élément de raccordement (2, 3, 4) présente un insert fileté (18) en matière plastique dure.

8. Raccord monotube (1) selon l'une des revendications 1 à 7, **caractérisé en ce que** l'élément de raccordement (4) pour le compteur réalisé sous forme de compteur à cartouche présente un joint d'étanchéité (13) pour séparer le boîtier du compteur, en particulier l'enveloppe en laiton du compteur, du fluide qui s'écoule.

9. Raccord monotube (1) selon l'une des revendications 1 à 8, **caractérisé en ce qu'**au moins un élément de raccordement (2, 3, 4) présente un filetage intérieur (8).

10. Raccord monotube (1) selon l'une des revendications 1 à 9, **caractérisé en ce qu'**au moins un élément de raccordement (2, 3, 4) présente un filetage extérieur (14), notamment réalisé de forme conique.

11. Raccord monotube (1) selon la revendication 9 ou 10, **caractérisé en ce qu'**au moins un filetage (8, 14) est réalisé sous forme de filetage en matière plastique, en particulier de filetage trapézoïdal en matière plastique.

12. Raccord monotube (1) selon l'une des revendications 1 à 11, **caractérisé en ce qu'**au moins un élément de raccordement (2, 3, 4) présente un joint à baïonnette, ou des éléments de fixation appropriés pour un joint à baïonnette.

13. Raccord monotube (1) selon l'une des revendications 1 à 12, **caractérisé en ce qu'**au moins un élément de raccordement (2, 3, 4) est réalisé sous la forme d'un raccord à brides pourvu notamment d'un dispositif de sécurité contre la translation axiale, comme par exemple un étrier, une vis de blocage, un jonc d'arrêt ou analogues.

14. Raccord monotube (1) selon l'une des revendications 1 à 13, **caractérisé en ce qu'**au moins un élément de raccordement (2, 3, 4) est réalisé sous la forme d'un raccord à emboîtement pourvu notamment d'un dispositif de sécurité contre la translation axiale, comme par exemple un étrier, une vis de blocage, un jonc d'arrêt ou analogues.

15. Raccord monotube (1) selon l'une des revendications 1 à 14, **caractérisé en ce que** la partie côté tube de l'assemblage à emboîtement présente une forme intérieure adaptée à la tuyauterie.

16. Raccord monotube (1) selon l'une des revendications 1 à 15, **caractérisé en ce que** des nervures de renforcement (10) sont prévues sur le côté extérieur.

17. Raccord monotube (1) selon l'une des revendications 1 à 16, **caractérisé en ce qu'**au moins un élément de raccordement (2, 3, 4) présente sur le côté extérieur un élément de renforcement entourant, réalisé notamment sous forme de bague cylindrique.

18. Raccord monotube (1) selon l'une des revendications 1 à 17, **caractérisé en ce qu'**au moins un élément de raccordement est assemblé au raccord monotube via des moyens pour neutraliser la force d'assemblage, notamment la force de vissage, en particulier un jonc d'arrêt ou analogues.
